# EUROPEAN PATENT APPLICATION

(11) **EP 1 714 553 A2**
(43) Date of publication of application: **25.10.2006**
(21) Application number: 06007341.8
(22) Date of filing: 06.04.2006
(51) Int. Cl.: A01N 47/08, A01N 25/12, A01N 25/10, A01N 25/08, B01J 2/28

(54) **System and plant for producing hard granules holding absorbed gaseous chloropicrin**

(30) Priority: 20.04.2005 IT MI20050137
(71) Applicant: Votta, Giuseppe, Dr., 04019 Terracina LT (IT)
(72) Inventor: Votta, Giuseppe, Dr., 04019 Terracina LT (IT)
(74) Representative: Di Iorio, Vincenzo

(57) **Abstract**

The invention refers to the production of hard granules of solubilized chloropicrin and to related plant for producing them, for the use in the sterilization field of agricultural lands and protected cultivations.

## Description

The invention refers to the production of hard granules of solubilized chloropicrin and to related plant for producing them, for the use in the sterilisation field of agricultural lands and protected cultivations.

The chloropicrin is a toxic gas previously used in war field and actually used for sterilizing the agricultural lands infested by insects or simply for eliminating the parasitic plants and it is used in absorbed form into a solid material, that causes many safety problems to persons that use the products.

The Applicant has studied a granulating plant for transforming the gaseous product in a solid product that can be easily distributed on the land and then it is covered with plastic sheets and in which the sun heat is sufficient to free the gaseous chloropicrin from the granule support. The support mixture is made-up by the following components of easy commercial purchase:
- chloropicrin
- bentonite
- silica of type FK 320
- mixture of polysaccaride having the function of anti-steaming and fixing agent of the chloropicrin.

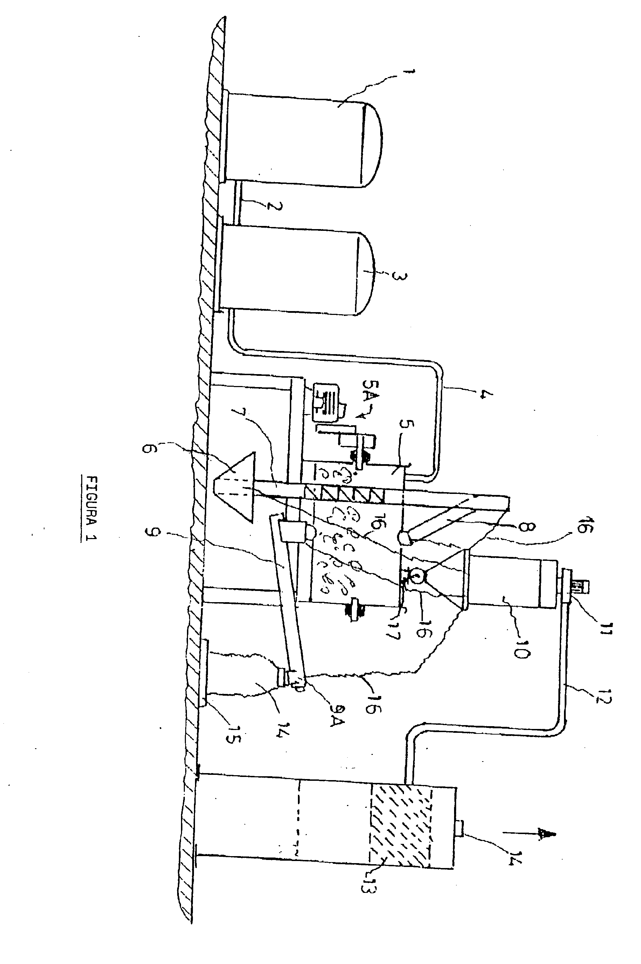

A unlimiting embodiment of the invention shall be now described for showing as the same can be applied and shall be now made reference, as an example, to the annexed figure, in which:
The Figure shows the various devices and tanks used for dosing and forming spherical product bodies suitable for the distribution on the land. The figure shows a tank 1 holding the gaseous chloropicrin that is laid onto a weighting device with load cells, and is joined by the pipe 2 to a second tank 3 holding a liquid polysaccharide, that is used to solubilize the gaseous chloropicrin in a mixture form. The liquid obtained in this manner is sent to a pipe 4 and then to a rotating mixer 5, that can hold until 500 kg of material. The mixer 5 is turned by a motor reduction unit 5A for obtaining the amalgamation with bentonite (colloidal clay) and with silica that are fed by an conical lower hopper 6 joined to the mixer 5 by the pipes 7 and 8. The pipe 7 holds a scroll for feeding the loaded material that enters through the pipe 8 into the mixer 5. A lower pipe 9 feeds the obtained granular product into a dispenser 9A that fills the sacks 14, weighted by the electronic balance 15 for forming the final weighted product packing.

Over the mixer 5 it is provided a suction and recycling cyclone 10 for the powders, with suction being obtained by a centrifugal fan 11 that feeds the sucked powders into the pipe 12 and then introduces them into the filter 13, that then discharges the cleaned air in atmosphere by the pipe 4. The suction cyclone 10 is joined by the flexible pipes 16 to the various plant parts, that is to say to the hopper 6, to the top side of the scroll pipe 7 and to the unloading pipe 8 and then to the lower unloading, that is the initial section of the product feeding pipe 9 and then to the delivery opening 9A that feeds the product into the sack 15. All these powders are sucked into the powder cyclone 10, and they fall by the gravity effect into the sealed mixer 5 crossing a non-return valve 17. In such a manner a minimum part of the toxic product is discharged together with the internal air in atmosphere and it is practically free of toxic garbage products.

The product packed in hermetically sealed sacks is supplied to the user who shall apply it on the land to be sterilised and then he shall cover it with plastic sheets for obtaining the development of toxic chloropicrin by the simple effect of solar heat.

In this manner there are fulfilled the ambient and workers protection standards that require as minimum emission as possible of toxic substances into the external ambient.

Although this invention was described with reference to one its particular embodiment, many other variants and modifications and other uses for other toxic products of normal use shall be evident to the skilled technicians. Therefore it is preferred that this invention is not limited to the specific shown disclosure, but only by the annexed claims.

## Claims

1. A method for the production of hard granules of solubilized chloropicrin and a related plant for producing them, for the use in the sterilization field of agricultural lands and protected cultivations, **characterized in that** there are foreseen a tank holding the chloropicrin that is supported on a weighting device, and is joined by a pipe to a second tank holding a polysaccaride that is used to fix the gaseous chloropicrin in the form of a liquid mixture, in which the liquid obtained in this manner is sent to a third pipe and then to a rotating mixer, that can hold until 500 kg of the solid material, in which the mixer is put in rotation by a motor reduction unit for obtaining the amalgamation with bentonite (colloidal clay) and with silica that are fed by a lower hopper joined by a pipe to the mixer.

2. Plant according to the preceding claim, in which the pipe feeding bentonite and silica to the mixer is provided with a scroll for feeding said filling material into the mixer.

3. Plant according to claims 1-2, in which it is foreseen a lower pipe directed to the mixer that feeds the final product obtained into a dispenser that fills sacks, weighted by an electronic balance for forming the final weighted product packing.

4. Plant according to claims 1-3, in which it is provided a suction and recycling cyclone for powders over the mixer, with suction being obtained by a centrifugal fan that sucks the air from the different plant tanks and separates powders and sends cleaned air to the final filter and in atmosphere.

5. Plant according to claims 1-3 and 4, in which the suction cyclone is joined by some flexible pipes to the various parts of the plant, that is to say to the hopper holding filling bentonite and silica, to the top side of the scroll pipe and further to the lower feeding unloading opening of finished product and further to the delivery opening that feeds the product into the collecting sack in which all these powders are sucked into said powder cyclone and then they fall by the gravity effect into the sealed mixer crossing a non-return valve, in such a manner a minimum part of the toxic product is discharged in atmosphere after having crossed the final filter and it is practically free of toxic garbage products.

6. A system for application of chloropicrin onto the agricultural land to be sterilised, that includes to cover the product of hard granules applied onto the land covered with plastic sheets for obtaining the development of toxic product by the effect of solar heat or of other heat sources, such as air heaters or radiators or stoves for agricultural use.
